Europäisches Patentamt

European Patent Office

Office européen des brevets

(19)

(11) Veröffentlichungsnummer: **0 410 100 A2**

# (12) EUROPÄISCHE PATENTANMELDUNG

(21) Anmeldenummer: 90109641.2

(22) Anmeldetag: 21.05.90

(51) Int. Cl.⁵: **H02G 3/04**

(30) Priorität: 26.07.89 DE 3924690

(43) Veröffentlichungstag der Anmeldung:
**30.01.91 Patentblatt 91/05**

(84) Benannte Vertragsstaaten:
**ES FR GB IT SE**

(71) Anmelder: **MERCEDES BENZ AG**
**Mercedesstrasse 137**
**D-7000 Stuttgart 60(DE)**

(72) Erfinder: **Bräunig, Dieter, Dipl.-Ing.**
**Plettenbergstrasse 3**
**D-7000 Stuttgart 1(DE)**

(54) **Rohrförmiges Teil mit einem Innenraum zur Aufnahme wenigstens einer Leitung.**

(57) Ein rohrförmiges Teil mit einem Innenraum zur Aufnahme wenigstens einer Leitung, insbesondere einer elektrischen Leitung zu deren Schutz gegen mechanische und/oder thermische Beschädigung, dessen Längsausdehnung wesentlich größer ist als dessen Querausdehnung, weist erfindungsgemäß einen sich über die gesamte Längsausdehnung erstreckenden Einführungsspalt auf, der durch einander in Umfangsrichtung des rohrförmigen Teils überlappende Stoßkanten des rohrförmigen Teils begrenzt ist - wodurch ein Querschnitt in Form eines Spiralenabschnitts gebildet wird - und durch den eine oder mehrere Leitungen quer zu ihrer Längserstreckung sehr einfach ein- oder ausfädelbar sind, wobei im unverformten Zustand des rohrförmigen Teils durch die nahezu aneinanderliegenden Begrenzungen des Einführungsspalts eine zuverlässige Abdichtung gegen Eindringen von Spritzwasser und Schmutz gewährleistet ist.

Fig. 1

EP 0 410 100 A2

## ROHRFÖRMIGES TEIL MIT EINEM INNENRAUM ZUR AUFNAHME WENIGSTENS EINER LEITUNG

Die Erfindung bezieht sich auf ein rohrförmiges Teil mit einem Innenraum zur Aufnahme wenigstens einer Leitung, insbesondere wenigstens einer elektrischen Leitung zu deren Schutz gegen mechanische und/oder thermische Beschädigung, dessen Längsausdehnung wesentlich größer ist als seine Querausdehnung. Ein rohrförmiges Teil mit diesen Merkmalen ist bekannt (DE 75 18 816 U1). Die elektrische Leitung muß in dieses längs eingeschoben werden, was mit langen Leitungen umständlich und mit bereits verlegten Leitungen gar nicht oder nur mit großem Aufwand möglich ist.

Auch in Hausinstallationen werden bekanntlich geschlossene Rohre zum Verlegen von elektrischen Leitungen durch Decken und Wände in Mauern und Beton eingesetzt, durch welche später die Leitungen längs eingeschoben werden können. Es ist auch bekannt, mehrteilige Schutzumhüllungen für Leitungen zu verwenden, die erst nach dem Einlegen der Leitungen entlang ihrer Längsfugen zusammengefügt werden, wozu mitunter Klammern verwendet werden müssen.

Es ist bereits ein rohrförmiges Teil bekannt (DE 35 35 975 C1), das an sich zur Bildung einer definierten Kontur an einer elastisch abgedichteten Leitungsdurchführung vorgesehen ist und in einen mehrere elektrische Leitungen umhüllenden weichelastischen Isolierschlauch eingeschoben werden kann, wobei die Leitungen durch einen sich über die gesamte Längsausdehnung des Teils erstreckenden Längsspalt in den Innenraum des Teils einfädelbar sind. Bei einer solchen Anordnung eines Längsspalts ist mechanische Beschädigung der Isolierung durch Kanten des Längsspalts beim Ein- oder Ausfädeln der Leitungen nicht unbedingt auszuschließen. Ferner ist auch auf größeren Längen wegen des radial offenen Längsspalts keine Abdichtung gegen Eindringen von Spritzwasser und Schmutz möglich, wenn ein solches Teil außerhalb des umhüllenden Isolierschlauches Verwendung finden sollte.

Es sind Halteklammern für elektrische oder Rohrleitungen bekannt (DE 29 46 143 C2, DE 81 02 462 U1, DE 37 37 113 C1), bei denen die Leitungen jeweils in einen Aufnahmeraum zwischen zwei Seitenwänden eingeschoben werden, deren abgewinkelte Enden sich spätestens bei eingeschobenen Leitungen wenigstens teilweise überdecken. Zwar ist mit diesen Halteklammern eine zuverlässige mechanische Festlegung der Leitungen möglich, die aber wegen deren geringer Längsausdehnungen lediglich punktuell ist. Sie kann in keiner Weise einen Schutz gegen mechanische und/oder thermische Beschädigungen gewährleisten, wie er mit dem gattungsbildenden rohrförmigen Teil möglich ist.

Das DE-GM 1 851 657 zeigt eine Anordnung zur Halterung von elektrischen Leitungen, bei der längs eines Stegs einstükkig an diesen angeformte, wechselseitig aufeinanderfolgende Haltearme vorgesehen sind, die in der Längsprojektion der Anordnung einen geschlossenen Kanal bilden, in welchen die Leitungen durch einen Einführungstrichter eingeführt werden können, der - ebenfalls in der Längsprojektion -durch von den wechselseitigen Haltearmen in entgegengesetzte Richtungen endseitig abragende einstückige Fortsätze gebildet ist.

Die Erfindung hat die Aufgabe, ein gattungsgemäßes rohrförmiges Teil so auszubilden, daß eine einfache und beschädigungsfreie Einführung auch bereits verlegter oder mit voluminösen Steckern versehener Leitungen möglich ist.

Diese Aufgabe wird mit den kennzeichnenden Merkmalen des Patentanspruchs 1 erfindungsgemäß gelöst.

Die kennzeichnenden Merkmale der Unteransprüche offenbaren vorteilhafte Weiterbildungen des erfindungsgemäßen rohrförmigen Teils.

Als Vorteile ergeben sich folgende Punkte:
- leichte Montage der Anordnung aufgrund des Einfädelungsprinzips,
- leichte Demontage,
- leichte nachträgliche Montage von Leitungen,
- keine mechanischen Zerstörungen der Isolation bei Montage und Demontage von Leitungen,
- thermischer und mechanischer Schutz für die Leitungen,
- kein eigenes Verschließen notwendig,
- kein selbständiges Herausfallen von Leitungen möglich,
- kein Eindringen von Schmutz und Spritzwasser,
- hohe Flexibilität bzw. Biegsamkeit,
- einfache Befestigung des rohrförmigen Teils mit herkömmlichen Befestigungsmitteln.

Weitere Einzelheiten und Vorteile gehen aus der Zeichnung eines Ausführungsbeispiels und deren sich hier anschließender eingehender Beschreibung hervor.

Es zeigen

Figur 1 eine Darstellung des Vorgangs der Einführung einer elektrischen Leitung in ein rohrförmiges Teil mit Hilfe eines geeigneten Werkzeugs,

Figur 2 eine Querschnittsansicht eines rohrförmigen Teils mit mehreren inliegenden elektrischen Leitungen.

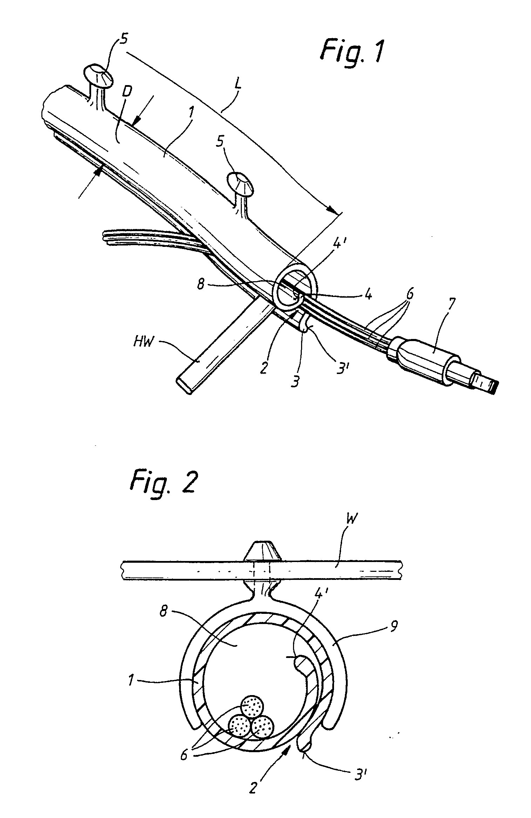

Ein rohrförmiges Teil 1, dessen Längsausdehnung L wesentlich größer ist als seine Querausdehnung D, weist gemäß **Figur 1** einen über seine gesamte Längsausdehnung L verlaufenden Einführungsspalt 2 auf, der durch einander überlappende Stoßkanten 3 und 4 des rohrförmigen Teils 1 begrenzt wird. An dem rohrförmigen Teil 1 sind Befestigungsmittel 5 angebracht, die in Bohrungen von anderen Bauteilen oder Wänden eingeclipst werden können. Die Befestigungsmittel können in bekannter Weise einstückig angeformt sein, aufgeklebt oder aufgeschweißt werden oder anderweitig befestigt sein.

Eine elektrische Leitung 6 mit einem Stecker 7, der wegen seiner Abmessungen nicht durch das rohrförmige Teil 1 schiebbar ist, wird unter elastischer Aufweitung des Einführungsspalts 2 quer zu ihrer Längserstreckung mittels eines an seinem Ende gut abgerundeten Hilfswerkzeugs HW -oder auch mittels eines Fingers - in den Innenraum 8 des rohrförmigen Teils 1 eingeführt und ist darin gegen mechanische und thermische Beschädigungen geschützt. An die Stoßkanten 3 und 4 sind Wülste 3' und 4' angeformt, die eine zusätzliche Sicherheit gegen Beschädigung der Isolierung der elektrischen Leitung 6 während des Ein-oder Ausfädelvorgangs gewährleisten.

Wie besonders aus **Figur 2** ersichtlich, hat der Querschnitt des rohrförmigen Teils 1 im unverformten Zustand die Form eines Spiralenabschnitts. Dies ist der wesentliche Unterschied zu dem einfach längs aufgeschlitzten zylindrischen Röhrchen, das aus dem gewürdigten Stand der Technik bekannt ist. Wegen der weitreichenden Überdeckung der Stoßkanten, die etwa einen Umfangswinkel von 90° erreicht, ist der Innenraum 8 gegen Eindringen von Spritzwasser und Schmutz hinreichend abgedichtet, weil die Begrenzungen des Einführungsspalts 2 nahezu aneinanderliegen.

Im Innenraum 8 des rohrförmigen Teils liegen mehrere elektrische Leitungen 6. An einer Wand W kann das rohrförmige Teil 1 auch ohne eigene Befestigungsmittel mittels einer herkömmlichen C-förmigen Halteklammer 9 oder dgl. befestigt werden.

Vorzugsweise werden die Stoßkanten 3 und 4 bzw. die Wülste 3' und 4' so ausgeformt, daß die innere Stoßkante 4, wie gezeigt, in den Innenraum des rohrförmigen Teils 1 radial hineinragt und die äußere Stoßkante 3 nach außen radial abragt, so daß sich im unverformten Zustand des rohrförmigen Teils 1 am inneren und am äußeren Auslauf des Einführungsspaltes 2 trichterartige, längs verlaufende Einführungsöffnungen ergeben. Dadurch wird das Ein- und Ausfädeln von Leitungen nochmals vereinfacht, so daß Leitungen auch ohne Hilfswerkzeug von Hand wenigstens ausgefädelt werden können.

Bei der Montage des rohrförmigen Teils sollte darauf geachtet werden, daß der äußere Wulst 4' unten liegt, damit sich an der Außenwand des Teils ansammelndes Kondenswasser an der solchermaßen gebildeten Unterkante abtropfen kann.

Zur Herstellung des rohrförmigen Teils kann z. B. ein extrudiertes endloses Kunststoffprofil verwendet werden, das unter Temperatureinwirkung aus seiner ursprünglich ebenen Form mit wulstförmig verdickten Rändern in die in Figur 2 gezeigte Querschnittsform des rohrförmigen Teils gebracht wird. Dabei sind Werkstoffe zu verwenden, die auch im Endzustand noch leicht elastisch verformbar sind. Speziell zur Verwendung des rohrförmigen Teils auch in engen Biegeradien kann abweichend von der gezeigten glattwandigen Ausführung auch eine Ausführung mit in bekannter Weise gewellter Wand benutzt werden, die eine noch höhere Flexibilität bzw. Biegsamkeit aufweist.

Es versteht sich, daß das erfindungsgemäße rohrförmige Teil in entsprechender Ausführung und Dimensionierung nicht nur elektrische Leitungen oder Kabelbäume schützend umhüllen kann, sondern auch z. B. Heizwasserleitungen oder Kältemittelleitungen isolieren kann, wobei wegen des speziell ausgebildeten Einführungsspalts auch diese in einfachster Weise eingelegt werden können bzw. das rohrförmige Teil in einem Arbeitsgang auf die Leitungen aufgezogen werden kann.

**Ansprüche**

1. Rohrförmiges Teil mit einem Innenraum zur Aufnahme wenigstens einer Leitung, insbesondere wenigstens einer elektrischen Leitung zu deren Schutz gegen mechanische und/oder thermische Beschädigung, dessen Längsausdehnung wesentlich größer ist als dessen Querausdehnung,
**gekennzeichnet durch**
einen sich über die gesamte Längsausdehnung (L) erstreckenden Einführungsspalt (2), der durch einander in Umfangsrichtung des rohrförmigen Teils (1) überlappende Stoßkanten (3, 4) des rohrförmigen Teils (1) begrenzt ist, wodurch sich ein Querschnitt des Teils (1) in Form eines Spiralenabschnitts ergibt.

2. Rohrförmiges Teil nach Anspruch 1,
**gekennzeichnet durch**
an die Stoßkanten (3, 4) angeformte Wülste (3', 4').

3. Rohrförmiges Teil nach Anspruch 1 oder 2,
**gekennzeichnet durch**
in den Innenraum (8) hineinragende Ausformung der inneren Stoßkante (4) und nach außen abragende Ausformung der äußeren Stoßkante (3), wodurch sich im unverformten Zustand des rohrförmigen Teils (1) am inneren und am äußeren Auslauf des Einführungsspaltes (2) in Umfangsrichtung trichterartige, entlang der Längserstreckung (L) verlaufende Einführungsöffnungen ergeben.

4. Rohrförmiges Teil nach Anspruch 1 oder 2, welches mit Mitteln zu seiner Befestigung an Wänden oder anderen Bauteilen versehen ist,
**gekennzeichnet durch**
einstückig an das rohrförmige Teil (1) angeformte Befestigungsmittel (5).

5. Rohrförmiges Teil nach Anspruch 1 oder 2, welches ferner zur Anpassung an den Verlauf der wenigstens einen elektrischen Leitung krümmbar ist,
**gekennzeichnet durch**
wenigstens abschnittweise Ausführung mit gewellter Wand.

Fig. 1

Fig. 2